# EUROPÄISCHE PATENTSCHRIFT

(11) **EP 4 144 616 B1**
(45) Veröffentlichungstag und Bekanntmachung des Hinweises auf die Patenterteilung: **05.08.2026**
(21) Anmeldenummer: 21195012.6
(22) Anmeldetag: 06.09.2021
(51) Int. Cl.: B62D 5/04, B60D 1/62, B60K 1/02, B60Q 11/00, G05D 1/00, B62D 15/02

(54) **NUTZFAHRZEUGANHÄNGER ZUR VERBINDUNG MIT EINEM ZUGFAHRZEUG EINGERICHTET ZUR UNTERSTÜTZTEN RAMPENANFAHRT UND VERFAHREN ZUR UNTERSTÜTZTEN RAMPENANFAHRT EINES NUTZFAHRZEUGANHÄNGERS**
COMMERCIAL VEHICLE TRAILER FOR CONNECTION TO A TRACTOR VEHICLE EQUIPPED FOR ASSISTED DRIVING ONTO A RAMP AND METHOD FOR ASSISTED DRIVING ONTO A RAMP OF A COMMERCIAL VEHICLE TRAILER
REMORQUE POUR VÉHICULES UTILITAIRES À ATTELER À UN VÉHICULE TRACTEUR POUR LA MISE À QUAI DE MANIÈRE ASSISTÉE ET PROCÉDÉ DE MISE À QUAI DE MANIÈRE ASSISTÉE D'UNE REMORQUE POUR VÉHICULES UTILITAIRES

(43) Veröffentlichungstag der Anmeldung: 08.03.2023
(73) Patentinhaber: Schmitz Cargobull AG, 48341 Altenberge (DE)
(72) Erfinder: Lannoije, Marnix, 48341 Altenberge (DE); Roters, Mark, 48619 Heek-Nienborg (DE); Weyring, Bernd, 48629 Metelen (DE)
(74) Vertreter: Cohausz & Florack

(56) Entgegenhaltungen:
- EP-A1- 2 360 543
- EP-A2- 1 826 107
- EP-A2- 2 607 195
- DE-A1- 10 033 345
- DE-A1- 10 244 298
- US-A1- 2020 233 410

## Beschreibung

### Gebiet

Beispielhafte Ausführungsformen der Erfindung betreffen einen Nutzfahrzeuganhänger und ein Verfahren zur unterstützten Rampenanfahrt, insbesondere bei einer Rückwärtsfahrt des Nutzfahrzeuganhängers.

### Hintergrund

Nutzfahrzeuganhänger werden beispielsweise an Rampen mit Waren beladen und entladen. Hierzu muss der Nutzfahrzeuganhänger insbesondere rückwärts an eine solche Rampe herangefahren werden, wobei beispielsweise der Fahrer eines mit dem Nutzfahrzeuganhänger verbundenen Zugfahrzeugs außerhalb des Nutzfahrzeuganhängers befindliche Objekte, insbesondere bei einer Rückwärtsfahrt, schlecht oder gar nicht sehen kann. Daher kann es bei der Rampenanfahrt häufig zu Zusammenstößen zwischen Nutzfahrzeuganhänger und anderen Objekten kommen, wodurch Schäden entstehen können. Insbesondere kann der Abstand zwischen Nutzfahrzeuganhänger und Rampe beispielsweise von dem Fahrer des Zugfahrzeugs nur grob geschätzt werden. Jedoch muss der Nutzfahrzeuganhänger zum Beladen und Entladen auf einen bestimmten Mindestabstand an die Rampe herangefahren werden. Daher kann es zu ungewollten Zusammenstößen zwischen Rampe und Nutzfahrzeuganhänger kommen, wodurch Kosten für die Reparatur und Ausfallzeiten der Objekte und der Nutzfahrzeuganhänger entstehen können.

Um ungewollte Zusammenstöße zu vermeiden, sind Systeme zur Rampenanfahrt bekannt. Hierbei ermittelt mindestens ein Sensor des Nutzfahrzeuganhängers Daten über die Umgebung und übermittelt diese Daten beispielsweise an ein mit dem Nutzfahrzeuganhänger verbundenes Zugfahrzeug. Das Zugfahrzeug kann beispielsweise die Daten auswerten und dem Fahrer so Informationen über den Abstand zur Rampe oder ein Bild von den Objekten hinter dem Nutzfahrzeuganhänger zeigen. Auf diese Weise kann ein Fahrer eines Zugfahrzeugs auch bei eingeschränkter Sicht Rampen zum Entladen des Nutzfahrzeuganhängers zuverlässig anfahren.

Für solche Systeme ist es jedoch notwendig, dass der Nutzfahrzeuganhänger und beispielsweise das Zugfahrzeug elektrisch miteinander verbunden sind, um die Sensoren des Nutzfahrzeuganhängers mit Energie zu versorgen und um die Daten der Sensoren an das Zugfahrzeug zu übermitteln.

Jedoch werden Nutzfahrzeuganhänger häufig auf Freiflächen vor einem Lager abgestellt und erst später von einem anderen Zugfahrzeug zu den Rampen zum Entladen und/oder Beladen des Nutzfahrzeuganhängers gefahren. Hierbei wird eine elektrische Verbindung zwischen dem Nutzfahrzeuganhänger und dem weiteren Zugfahrzeug häufig nicht hergestellt, da dies zu zeitaufwändig oder aufgrund der Ausgestaltung des anderen Zugfahrzeugs nicht möglich ist. Somit steht bei einer solchen Rampenanfahrt keine Unterstützung für die Rampenanfahrt zur Verfügung. Daher können bei fehlender elektrischer Verbindung zwischen Nutzfahrzeuganhänger und anderem Zugfahrzeug häufig Schäden durch Zusammenstöße zwischen Objekten und Nutzfahrzeuganhänger entstehen, wodurch Kosten für die Reparatur und zusätzliche Ausfallzeiten entstehen können.

US 2020/233410 A1 offenbart einen Nutzfahrzeuganhänger, welcher eine eigenständige Energiequelle, beispielsweise zum Antreiben des Nutzfahrzeuganhängers, aufweist, wobei der beschriebene Nutzfahrzeuganhänger autonom, beispielsweise unter Einbeziehung von als Radar ausgestalteten Messmitteln, einparken kann.

### Zusammenfassung einiger beispielhafter Ausführungsformen der Erfindung

Die vorliegende Erfindung hat sich daher unter anderem die Aufgabe gestellt, die vorgenannten Probleme zu überwinden und Schäden bei der Rampenanfahrt eines Nutzfahrzeuganhängers zu vermeiden.

Gemäß einem ersten Aspekt der Erfindung wird ein Nutzfahrzeuganhänger zur Verbindung mit einem Zugfahrzeugeingerichtet zur unterstützten Rampenanfahrt insbesondere bei einer Rückwärtsfahrt des Nutzfahrzeuganhängers offenbart,
- mit zumindest einer den Nutzfahrzeuganhänger begrenzenden Wand,
- mit mindestens einem Messmittel zur Ermittlung von Daten indikativ für einen Abstand zwischen der zumindest einen Wand, insbesondere zwischen einer Außenseite der zumindest einen Wand, und einem außerhalb des Nutzfahrzeuganhängers befindlichen Objekt,
- mit mindestens einer Energiequelle,
- mit mindestens einer Steuereinrichtung, und
- mit mindestens einer Bremseinrichtung und/oder mit mindestens einer Ausgabevorrichtung,
- wobei die mindestens eine Steuereinrichtung zur Berechnung des Abstands aus den von dem mindestens einen Messmittel ermittelten Daten eingerichtet ist und in Abhängigkeit des ermittelten Abstands die mindestens eine Bremseinrichtung und/oder die mindestens eine Ausgabevorrichtung steuert,
- wobei die mindestens eine Energiequelle zur Versorgung des mindestens einen Messmittels, der mindestens einen Steuereinrichtung sowie der mindestens einen Bremseinrichtung und/oder der mindestens einen Ausgabevorrichtung mit Energie eingerichtet ist,
- wobei der Nutzfahrzeuganhänger ferner mindestens einen Aktivierungssensor umfasst,
- wobei der mindestens eine Aktivierungssensor zum Erfassen eines Aktivierungsereignisses und zur Ausgabe eines Aktivierungssignals eingerichtet ist,
- wobei die mindestens eine Energiequelle durch das Aktivierungssignal das mindestens eine Messmittel, die mindestens eine Steuereinrichtung, die mindestens eine Ausgabevorrichtung und/oder die mindestens eine Bremseinrichtung mit Energie versorgt, und
- wobei der mindestens eine Aktivierungssensor einen Sensor einer Telematikeinrichtung, einen ABS Sensor, einen Kilometerzähler, insbesondere einen Präzisionskilometerzähler, einen Beschleunigungssensor, einen Spannungssensor, einen Achslastsensor, und/oder einen Lagesensor, insbesondere einen GPS Sensor, umfasst,
- wobei das Aktivierungssignal indikativ für den Beginn der Anfahrt einer Rampe ist.

Ein Messmittel zur Ermittlung von Daten indikativ für einen Abstand ist beispielweise ein Sensor zur Ermittlung von Abständen. Abhängig von dem jeweiligen Abstand einer Wand, insbesondere einer Außenseite einer Wand, zu einem außerhalb des Nutzfahrzeuganhängers befindlichen Objekts können die ermittelten Daten variieren, welche indikativ für den jeweiligen Abstand sind. Hierbei kann das Messmittel beispielsweise quantitative und/oder qualitative Daten zur Verfügung stellen.

Insbesondere ist das Messmittel dazu eingerichtet, Daten indikativ für einen Abstand einer Außenseite einer Wand zu einem vor und/oder hinter und/oder neben dem Nutzfahrzeuganhänger befindlichen Objekts zu erfassen. Bei der den Nutzfahrzeuganhänger begrenzenden Wand handelt es sich insbesondere um die Außenseite einer den Nutzfahrzeuganhänger begrenzenden Wandung, welche sich vorzugsweise im Bereich des Hecks des Nutzfahrzeuganhängers befindet.

Ein Nutzfahrzeuganhänger kann zum Beispiel ein Anhänger für einen Lastkraftwagen, wie ein Starrdeichselanhänger oder ein Gelenkdeichselanhänger oder ein Sattelauflieger sein. Solche Nutzfahrzeuganhänger sind insbesondere für den Transport von Gütern, vorzugsweise Stückgütern, im öffentlichen Straßenverkehr vorgesehen. Zu diesem Zweck weisen Nutzfahrzeuganhänger unterschiedliche Arten von Nutzfahrzeugaufbauten auf, welche der Aufnahme der zu transportierenden Güter in einem Laderaum dienen.

So sind beispielsweise Kofferaufbauten mit festen Seitenwänden, einer festen Stirnwand, einer durch Flügeltüren gebildeten Rückwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet.

Neben Kofferaufbauten sind zudem sogenannte Planenaufbauten bekannt, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Plane entlang der Seitenwand verschoben werden kann, spricht man auch von sogenannten Curtainsidern.

Dementsprechend soll unter einem Nutzfahrzeugaufbau beispielsweise ein Kofferaufbau, ein Planenaufbau und/oder ein Curtainsider verstanden werden.

Ein außerhalb des Nutzfahrzeuganhängers befindliches Objekt kann beispielsweise jegliches Objekt sein, das nicht Teil des Nutzfahrzeuganhängers ist. Dabei können außerhalb des Nutzfahrzeuganhängers befindlichen Objekte jegliche Form aufweisen und sind beispielsweise Menschen, andere Fahrzeuge, Bauwerke, Rampen, Säulen, Wände, Gabelstapler, andere Nutzfahrzeuganhänger usw. Die außerhalb des Nutzfahrzeuganhängers befindlichen Objekte können sich dabei örtlich vor, über, seitlich, unterhalb, hinter oder rückwärtig zu dem Nutzfahrzeuganhänger, insbesondere zu einer Wand des Nutzfahrzeuganhängers, befinden. Dabei kann beispielsweise die Ermittlung des Abstands einer Wand des Nutzfahrzeuganhängers zu außerhalb des Nutzfahrzeuganhängers befindlichen Objekten, die hinter oder rückwärtig des Nutzfahrzeuganhängers angeordnet sind, besonders wichtig bei der Rampenanfahrt, insbesondere bei der Rückwärtsfahrt des Nutzfahrzeuganhängers, sein.

Eine Energiequelle kann beispielsweise eine Vorrichtung sein, die Energie für den Nutzfahrzeuganhänger, das mindestens eine Messmittel, die mindestens eine Steuereinrichtung, die mindestens eine Bremseinrichtung und/oder weitere Vorrichtungen des Nutzfahrzeuganhängers bereitstellt. Hierbei kann es sich bei der bereitgestellten Energie um elektrische Energie, Druckluft oder jede andere Form von Energie handeln. Hierzu kann die Energiequelle zum Beispiel als Batterie, als Primärzelle, als Sekundärzelle, als Motor, als pneumatische Pumpe und/oder als hydraulische Pumpe ausgestaltet sein.

Eine Steuereinrichtung kann beispielsweise eine Vorrichtung zum Auswerten von Daten, Steuern von weiteren Vorrichtungen und/oder Ausgeben von Signalen sein. Beispielsweise kann vorgesehen sein, dass die mindestens eine Steuereinrichtung in Abhängigkeit von den ermittelten Daten indikativ für den Abstand die Bremseinrichtung steuert. Hierzu kann die mindestens eine Steuereinrichtung abhängig von vorgegenebenen Parametern die Bremseinrichtung insbesondere dosiert steuern, um die Geschwindigkeit des Nutzfahrzeuganhängers zu regulieren.

Die mindestens eine Steuereinrichtung kann Hardware- und/oder Software-Komponenten umfassen. Die mindestens eine Steuereinrichtung kann beispielsweise mindestens einen Speicher mit Programmanweisungen eines Computerprogramms und mindestens einen Prozessor ausgebildet zum Ausführen von Programmanweisungen aus dem mindestens einen Speicher umfassen. Dementsprechend sollen insbesondere auch Steuereinrichtungen als offenbart verstanden werden, die zumindest einen Prozessor und zumindest einen Speicher mit Programmanweisungen umfassen, wobei der zumindest eine Speicher und die Programmanweisungen eingerichtet sind, gemeinsam mit dem zumindest einen Prozessor die mindestens eine Bremseinrichtung und/oder die mindestens eine Ausgabevorrichtung zu steuern. Das Steuern der Bremseinrichtung und/oder der mindestens einen Ausgabevorrichtung erfolgt zum Beispiel über eine Steuerverbindung,

Eine Bremseinrichtung kann beispielsweise eine Vorrichtung zur Reduktion der Geschwindigkeit des Nutzfahrzeuganhängers sein. Dabei kann die mindestens eine Bremseinrichtung an den Rädern des Nutzfahrzeuganhängers angeordnet sein. Die mindestens eine Bremseinrichtung kann beispielsweise eine elektrische, eine hydraulische Bremse und/oder eine Druckluftbremse sein.

Vorteilhafterweise können mit dem erfindungsgemäßen Nutzfahrzeuganhänger Zusammenstöße bei der Anfahrt von Rampen verhindert werden, insbesondere auch dann, wenn der Nutzfahrzeuganhänger nicht elektrisch und/oder mittels Druckluft mit einem Zugfahrzeug verbunden ist. Auf diese Weise können die Kosten für Reparaturen und Ausfallzeiten reduziert werden.

Auch ohne eine elektrische Verbindung zwischen dem Zugfahrzeug und dem Nutzfahrzeuganhänger können Schäden durch Zusammenstöße des Nutzfahrzeuganhängers mit außerhalb des Nutzfahrzeuganhängers befindlichen Objekten verhindert werden, sodass die Bearbeitungszeit für das Herstellen einer elektrischen Verbindung und/oder einer Druckluftverbindung entfällt. Hierdurch ist der Nutzfahrzeuganhänger in diesem Zusammenhang autark und es können verschiedene Zugfahrzeuge an den Nutzfahrzeuganhänger angeschlossen werden. Somit können auch Zugfahrzeug eingesetzt werden, die nicht elektrisch und/oder mittels Druckluft mit dem Nutzfahrzeuganhänger verbunden werden können.

Vorzugsweise versorgt die Energiequelle das Messmittel und die mindestens eine Steuereinrichtung mit Energie. Des Weiteren ist es bevorzugt, dass die Energiequelle zusätzlich die mindestens eine Bremseinrichtung und/oder die mindestens eine Ausgabevorrichtung mit Energie versorgt.

Gemäß einem weiteren Aspekt der Erfindung wird ein Verfahren zur unterstützten Rampenanfahrt eines Nutzfahrzeuganhängers, insbesondere eines erfindungsgemäßen Nutzfahrzeuganhängers offenbart, umfassend folgende Schritte:
- Ermitteln von Daten indikativ für einen Abstand zwischen einer den Nutzfahrzeuganhänger begrenzenden Wand und einem außerhalb des Nutzfahrzeuganhängers befindlichen Objekt, insbesondere mittels mindestens eines Messmittels,
- Berechnung eines Abstands aus den ermittelten Daten, insbesondere mittels mindestens einer Steuereinrichtung,
- Steuern mindestens einer Bremseinrichtung und/oder mindestens einer Ausgabevorrichtung, insbesondere durch die mindestens eine Steuereinrichtung, in Abhängigkeit des ermittelten Abstands,
- wobei, insbesondere mit mindestens einer Energiequelle, das mindestens eine Messmittel, die mindestens eine Steuereinrichtung sowie die mindestens eine Bremseinrichtung und/oder die mindestens eine Ausgabevorrichtung mit Energie versorgt werden, und
- wobei insbesondere das mindestens eine Messmittel, die mindestens eine Steuereinrichtung und die mindestens eine Energiequelle sowie die mindestens eine Bremseinrichtung und/oder die mindestens eine Ausgabevorrichtung Bestandteil des Nutzfahrzeuganhängers sind, wobei das Verfahren ferner umfasst:
   - Erfassen eines Aktivierungsereignisses, insbesondere durch mindestens einen Aktivierungssensor,
   - Ausgeben eines Aktivierungssignals, insbesondere von dem mindestens einen Aktivierungssensor, zum Initiieren des Verfahrens, und
   - Initiieren der Versorgung des mindestens einen Messmittels, der mindestens einen Steuereinrichtung, der mindestens einen Ausgabevorrichtung und/oder der mindestens einen Bremseinrichtung mit Energie durch die mindestens eine Energiequelle,
   - Ausgeben des Aktivierungssignals bei einer Rückwärtsfahrt, bei einer Rückwärtsbeschleunigung, bei einer Lagebestimmung und/oder bei der Messung einer Spannung.

Es hat sich herausgestellt, dass mit dem erfindungsgemäßen Verfahren Schäden durch Zusammenstöße effektiv verhindert werden können, sodass Kosten für Reparaturen und Ausfallzeiten entfallen können. Zudem kann der Nutzfahrzeuganhänger unabhängig von der jeweiligen Zugmaschine oder dem jeweiligen Zugfahrzeug verwendet werden und es wird keine elektrische Verbindung zwischen der Zugmaschine oder dem Zugfahrzeug und dem Nutzfahrzeuganhänger benötigt. Hierdurch kann der Aufwand zum Ankoppeln des Nutzfahrzeuganhängers reduziert werden.

Bevorzugt wird das Verfahren durchgeführt, ohne dass der Nutzfahrzeuganhänger elektrisch und/oder mittels Druckluft mit einem Zugfahrzeug verbunden ist. Vorzugsweise wird das Verfahren von dem Nutzfahrzeuganhänger unabhängig von einem Zugfahrzeug durchgeführt.

Im Folgenden werden die Eigenschaften des offenbarten Nutzfahrzeuganhängers und des Verfahrens beispielhaft beschrieben.

In einer beispielhaften Ausführungsform kann das mindestens eine Messmittel einen Ultraschallsensor, einen Radarsensor, und/oder einen optischer Sensor umfassen.

Mit optische Sensoren, beispielsweise mit Bildsensoren, können vorteilhafterweise außerhalb des Nutzfahrzeuganhängers befindliche Objekte einfach erkannt werden. Zudem können mittels optischer Sensoren Bewegungsabläufe erkannt werden. Auf diese Weise können außerhalb des Nutzfahrzeuganhängers befindlichen Objekte, die sich in den Bereich hinter dem Nutzfahrzeuganhänger hineinbewegen, frühzeitig von der mindestens einer Steuereinrichtung berücksichtigt werden. Beispiele für Bildsensoren sind Mono- oder Stereokameras. Sie haben typischerweise eine Reichweite von weniger als 100m.

Insbesondere können mit Infrarotsensoren oder Lidarsensoren auch nachts oder bei schlechter Beleuchtung außerhalb des Nutzfahrzeuganhängers befindlichen Objekte zuverlässig erkannt werden.

Ultraschallsensoren sind vorteilhafterweise günstig und können außerhalb des Nutzfahrzeuganhängers befindliche Objekte in einem Nahbereich, beispielsweise von etwa 10m, zuverlässig erkennen. Radarsensoren können vorteilhafterweise außerhalb des Nutzfahrzeuganhängers befindliche Objekte auch in einem großen Abstand, insbesondere von mehr als 10m, zuverlässig erkennen und eigenen sich daher insbesondere für die Erkennung von außerhalb des Nutzfahrzeuganhängers befindlichen Objekten in großen Abständen. Darüber hinaus wird die Funktion der Radarsensoren nicht wesentlich durch Umwelteinflüsse verändert. Beispiele für Radarsensoren sind Radarsensoren mit Radarsignalen mit einer Chirp-Sequence-Modulation im Frequenzbereich 24 GHz oder 77GHz. Solche Radarsensoren können eine Reichweite von mehr als 100m haben.

IDer Nutzfahrzeuganhänger umfasst ferner mindestens einen Aktivierungssensor, wobei der mindestens eine Aktivierungssensor zum Erfassen eines Aktivierungsereignisses eingerichtet ist, wobei der mindestens eine Aktivierungssensors zur Ausgabe eines Aktivierungssignals eingerichtet ist, und wobei durch das Aktivierungssignal die mindestens eine Energiequelle das mindestens eine Messmittel, die mindestens eine Steuereinrichtung, die mindestens eine Ausgabevorrichtung und/oder die mindestens eine Bremseinrichtung mit Energie versorgt. Insbesondere ist der Aktivierungssensor derart eingerichtet, dass bei Erfassen eines Aktivierungsereignisses das Aktivierungssignal ausgegeben wird.

Ein Aktivierungssensor ist ein Sensor zum Erfassen eines Aktivierungsereignisses sein. Dabei ist das Aktivierungsereignis indikativ für den Beginn der Anfahrt der Rampe. Das Aktivierungsereignis kann zum Beispiel eine Rückwärtsfahrt des Nutzfahrzeuganhängers sein, eine bestimmte Geschwindigkeit des Nutzfahrzeuganhängers oder ein rückwärtiges Beschleunigen des Nutzfahrzeuganhängers sein. Das Aktivierungsereignis kann auch eine manuelle Eingabe von einem Nutzer oder eine geographische Position des Nutzfahrzeuganhängers sein.

Vorteilhafterweise kann durch das Aktivierungssignal des mindestens einen Aktivierungssensors die mindestens eine Energiequelle das mindestens eine Messmittel, die mindestens eine Steuereinrichtung, die mindestens eine Ausgabevorrichtung und/oder die mindestens eine Bremseinrichtung mit Energie versorgen. Hierdurch können vorteilhafterweise bei einer Anfahrt der Rampe, die Vorrichtungen des Nutzfahrzeuganhängers aktiviert werden, wodurch die Rampenanfahrt, insbesondere bei einer Rückwärtsfahrt des Nutzfahrzeuganhängers, unterstützt wird. Auf diese Weise können die Vorrichtungen des Nutzanhängers nur dann aktiv sein, wenn eine Rampe angefahren wird. Somit kann die Energiequelle vorteilhafterweise geschont werden und ein ungewolltes Einbremsen des Nutzfahrzeuganhängers kann verhindert werden.

Der mindestens eine Aktivierungssensor umfasst einen Sensor einer Telematikeinrichtung, einen ABS Sensor, einen Kilometerzähler, insbesondere einen Präzisionskilometerzähler, einen Beschleunigungssensor, einen Spannungssensor, einen Achslastsensor, und/oder einen Lagesensor, insbesondere einen GPS Sensor.

In einer beispielhaften Ausführungsform kann der mindestens eine Aktivierungssensor einen Schalter umfassen.

Mit einem ABS Sensor kann vorteilhafterweise erkannt werden, dass der Nutzfahrzeuganhänger rückwärtsfährt. Mit einem Kilometerzähler, insbesondere einem Präzisionskilometerzähler, kann zusätzlich die zurückgelegte Strecke ermittelt werden, um eine Rückwärtsfahrt von einem Rangieren zu unterscheiden.

Mit einem Beschleunigungssensor kann vorteilhafterweise eine Rückwärtsfahrt erkannt werden und gleichzeitig die Geschwindigkeit des Nutzfahrzeuganhängers bestimmt werden. Hierbei können beispielweise die Anfahrt von Rampen mit geringen Geschwindigkeiten von Rückwärtsfahrten mit höheren Geschwindigkeiten über längere Strecken unterschieden werden.

Mit einem Spannungssensor kann vorteilhafterweise erkannt werden, dass der Nutzfahrzeuganhänger an eine Zugmaschine oder ein Zugfahrzeug angeschlossen wurde, woraufhin das Aktivierungssignal ausgegeben werden kann. Mit einem Schalter kann das Aktivierungssignal manuell ausgelöst werden, wobei ein Schalter besonders einfach und kostengünstig ist.

Vorteilhafterweise kann mit einem Lagesensor, insbesondere einem GPS Sensor, abhängig vom Ort, wie beispielsweise einem Lager, ein Aktivierungssignal ausgegeben werden. In weiter vorteilhafter Weise kann ein Aktivierungssignal über eine Telematikeinrichtung des Nutzfahrzeuganhängers ausgegeben werden, sofern ein Nutzer einem mit der Telematikeinrichtung verbundenen Fahrzeugmanagementsystem kommuniziert, dass der jeweilige Nutzfahrzeuganhänger verfahren werden soll.

Die von einem Achslastsensor ermittelten Daten können Rückschlüsse hinsichtlich einer Rückwärtsfahrt des Nutzfahrzeuganhängers ermöglichen. Bevorzugt kann der Achslastsensor mit einem Türsensor und/oder einem Curtainsensor verbunden sein, um die Rückwärtsfahrt von einem Be- oder Entladen unterscheiden zu können. So können geschlossene Türen und/oder Curtains auf eine Bewegung hinweisen, während geöffnete Türen und/oder Curtains auf ein Beladen und Entladen hinweisen.

Vorzugsweise ist es ebenfalls möglich, eine oder mehrere der vorgenannten Aktivierungssensoren zur Erfassung eines Aktivierungsereignisses miteinander zu verbinden, wodurch das Aktivierungssignal in zuverlässiger Weise in Abhängigkeit einer Vielzahl an Sensormessergebnissen ausgegeben werden kann.

In einer beispielhaften Ausführungsform kann der Nutzfahrzeuganhänger ferner mindestens einen Deaktivierungssensor umfassen, wobei der mindestens eine Deaktivierungssensor zum Erfassen eines Deaktivierungsereignisses eingerichtet sein kann, wobei der mindestens eine Deaktivierungssensors zur Ausgabe eines Deaktivierungssignals eingerichtet sein kann, und wobei die mindestens eine Energiequelle durch das Deaktivierungssignal die Versorgung des mindestens einen Messmittels, der mindestens einen Steuereinrichtung, der mindestens einen Ausgabevorrichtung und/oder der mindestens einen Bremseinrichtung mit Energie unterbricht. Insbesondere wird bei Erfassung eines Deaktivierungsereignisses ein Deaktivierungssignal mittels des mindestens eines Deaktivierungssensors ausgegeben.

Ein Deaktivierungssensor kann beispielsweise ein Sensor zum Erfassen eines Deaktivierungsereignisses sein. Dabei kann das Deaktivierungsereignis beispielsweise indikativ für das Ende der Anfahrt der Rampe sein. Das Deaktivierungsereignis kann zum Beispiel das Stoppen der Rückwärtsfahrt, insbesondere für eine längere Zeit, ein Anstoßen oder ein Bremsen bis zum Stillstand sein.

Vorteilhafterweise kann durch das Deaktivierungssignal des mindestens einen Deaktivierungssensors die Versorgung des mindestens einen Messmittels, der mindestens einen Steuereinrichtung, der mindestens einen Ausgabevorrichtung und/oder der mindestens einen Bremseinrichtung mit Energie durch die mindestens eine Energiequelle beendet oder unterbrochen werden. Dadurch kann vorteilhafterweise bei einer abgeschlossenen Anfahrt der Rampe, die Vorrichtungen des Nutzfahrzeuganhängers deaktiviert werden, sodass die unterstützte Rampenanfahrt beendet wird. Auf diese Weise können die Vorrichtungen des Nutzanhängers deaktiviert werden, wenn eine Rampenanfahrt abgeschlossen ist. Somit kann die Energiequelle vorteilhafterweise geschont werden.

Bei einem Deaktivieren kann vorteilhafterweise die Bremseinrichtung aktiviert bleiben, um ein Wegrollen des Nutzfahrzeuganhängers während des Beladens und/oder Entladens zu verhindern.

In einer beispielhaften Ausführungsform kann der mindestens eine Deaktivierungssensor einen Schwingungssensor, eine Zeitschaltuhr, einen Spannungssensor, einen Annäherungssensor und/oder einen Schalter umfassen.

Mit einem Schwingungssensor kann auf effektive Weise ein leichtes Anstoßen mit dem Nutzfahrzeuganhänger an die Rampe am Ende der Anfahrt festgestellt werden. Mit einer Zeitschaltuhr kann auf besonders einfache Weise nach einer vorgegebenen Zeit ein Deaktivierungssignal ausgegeben werden.

Mit einem Annäherungssensor kann das Deaktivierungssignal bei einem eingestellten Abstand ausgegeben werden. Auf diese Weise kann der Nutzfahrzeuganhänger auf einfache Weise bei einem eingestellten Abstand von der Rampe angehalten werden.

Mit einem Spannungssensor kann vorteilhafterweise erkannt werden, wenn der Nutzfahrzeuganhänger von einer Zugmaschine oder einem Zugfahrzeug abgekoppelt wird, woraufhin das Deaktivierungssignal ausgegeben werden kann.

Mit einem Schalter kann kostengünstig das Deaktivierungssignal manuell ausgelöst werden.

Vorzugsweise ist es ebenfalls möglich, eine oder mehrere der vorgenannten Deaktivierungssensoren zur Erfassung eines Deaktivierungsereignisses miteinander zu verbinden, wodurch das Deaktivierungssignal in zuverlässiger Weise in Abhängigkeit einer Vielzahl an Sensormessergebnissen ausgegeben werden kann.

In einer beispielhaften Ausführungsform kann der Nutzfahrzeuganhänger mindestens eine Ausgabevorrichtung umfassen, wobei die mindestens eine Ausgabevorrichtung zur Ausgabe eines optischen und/oder akustischen Signals abhängig vom dem ermittelten Abstand eingerichtet sein kann. Beispielsweise ist die Ausgabevorrichtung als Seitenmarkierungsleuchte, insbesondere als Umrissleuchte, des Nutzfahrzeuganhängers ausgestaltet und gibt Blinkcodes indikativ für einen Aktivitätszustand und/oder für den Abstand einer Wand des Nutzfahrzeuganhängers zu einem außerhalb des Nutzfahrzeuganhängers angeordneten Objekts aus.

Eine Ausgabevorrichtung ist zum Beispiel eine Vorrichtung zur Ausgabe des ermittelten Abstandes, um den Fahrer über den ermittelten Abstand zu informieren.

Zudem kann die Ausgabevorrichtung den Fahrer beispielsweise außerhalb des Nutzfahrzeuganhängers befindliche Objekte anzeigen. Hierbei ist die Ausgabevorrichtung vorteilhafterweise in Sehweite und/oder Hörweite des Fahrers angeordnet. Auf diese Weise kann der Fahrer der Zugmaschine bzw. des Zugfahrzeugs bei der Rampenanfahrt unterstützt werden, sodass Zusammenstöße zwischen dem Nutzfahrzeuganhänger und einem außerhalb des Nutzfahrzeuganhängers befindlichen Objekt effektiv verhindert werden können.

In einer beispielhaften Ausführungsform kann das Verfahren ferner umfassen:
- Steuern der Geschwindigkeit des Nutzfahrzeuganhängers abhängig von dem ermittelten Abstand.

Auf diese Weise kann vorteilhaftweise bei einer Annäherung an eine Rampe oder ein außerhalb des Nutzfahrzeuganhängers befindliches Objekt, die Geschwindigkeit an den ermittelten Abstand angepasst werden. Hierdurch kann frühzeitig auf ein außerhalb des Nutzfahrzeuganhängers befindliches Objekt reagiert werden, um die Anfahrt einfach und besser kontrollieren zu können.

Das Verfahren umfasst ferner:
- Erfassen eines Aktivierungsereignisses, insbesondere durch mindestens einen Aktivierungssensor,
- Ausgeben eines Aktivierungssignals, insbesondere von dem mindestens einen Aktivierungssensor, zum Initiieren des Verfahrens, und
- insbesondere Initiieren der Versorgung des mindestens einen Messmittels, der mindestens einen Steuereinrichtung, der mindestens einen Ausgabevorrichtung und/oder der mindestens einen Bremseinrichtung mit Energie durch die mindestens eine Energiequelle.

Vorteilhafterweise kann durch das Aktivierungssignal das erfindungsgemäße Verfahren initiiert werden, wobei das Aktivierungssignal vorzugsweise bei der Erfassung eines Aktivierungsereignisses ausgegeben wird. Auf diese Weise kann das Verfahren nur dann verwendet werden, wenn eine Rampe angefahren wird. Somit kann die Energiequelle vorteilhafterweise geschont werden.

Das Verfahren umfasst ferner:
- Ausgeben des Aktivierungssignals bei einer Rückwärtsfahrt, bei einer Rückwärtsbeschleunigung, bei einer Lagebestimmung, bei der Messung einer Spannung und/oder bei einer Betätigung eines Schalters.

Bei der Ausgabe des Aktivierungssignals bei einer Rückwärtsfahrt kann auf einfache Weise eine Rampenanfahrt ermittelt werden und das Verfahren initiiert werden. Bei einer Rückwärtsbeschleunigung kann vorteilhafterweise eine Rückwärtsfahrt und gleichzeitig die Geschwindigkeit des Nutzfahrzeuganhängers erkannt werden. Hierbei können beispielweise die Anfahrt von Rampen mit geringen Geschwindigkeiten von Rückwärtsfahrten mit höheren Geschwindigkeiten über längere Strecken unterschieden werden.

Mit einer Messung einer Spannung kann vorteilhafterweise erkannt werden, dass der Nutzfahrzeuganhänger an eine Zugmaschine oder an ein Zugfahrzeug angeschlossen wurde, woraufhin das Aktivierungssignal ausgegeben wird. Mit der Betätigung eines Schalters kann das Aktivierungssignal manuell ausgelöst werden, wobei ein Schalter besonders kostengünstig sein kann.

Vorteilhafterweise kann bei einer Lagebestimmung, insbesondere mit einem GPS Sensor, die Position des Nutzfahrzeuganhängers ermittelt werden, sodass, falls sich der Nutzfahrzeuganhänger beispielsweise auf einer Lagerfläche befindet, ein Aktivierungssignal ausgegeben werden kann.

In einer beispielhaften Ausführungsform kann das Verfahren ferner umfassen:
- Erfassen eines Deaktivierungsereignisses, insbesondere durch mindestens einen Deaktivierungssensor,
- Ausgeben eines Deaktivierungssignal, insbesondere von dem mindestens einen Deaktivierungssensor, zum Beenden des Verfahrens, und
- insbesondere Beenden der Versorgung des mindestens einen Messmittels, der mindestens einen Steuereinrichtung, der mindestens einen Ausgabevorrichtung und/oder der mindestens einen Bremseinrichtung mit Energie durch die mindestens eine Energiequelle.

Vorteilhafterweise kann durch das Deaktivierungssignal das Verfahren beendet werden, wobei das Deaktivierungssignal in Abhängigkeit des erfassten Deaktivierungsereignisses ausgegeben wird. Auf diese Weise kann das Verfahren nur dann verwendet werden, wenn eine Rampe angefahren wird. Somit kann die Energiequelle vorteilhafterweise geschont werden.

In einer beispielhaften Ausführungsform kann das Verfahren ferner umfassen:
- Ausgeben des Deaktivierungssignals, insbesondere von dem mindestens einen Deaktivierungssensor, bei einem Anstoßen zumindest einer den Nutzfahrzeuganhänger begrenzenden Wand mit einem außerhalb des Nutzfahrzeuganhängers befindlichen Objekt, bei einem eingestellten ermittelten Abstand, beim Messen einer Spannung, beim Abkoppeln des Nutzfahrzeuganhängers und/oder bei der Betätigung eines Schalters.

Bei einem Anstoßen des Nutzfahrzeuganhängers an eine Rampe, kann auf einfache Weise festgestellt werden, dass die Rampe erreicht wurde.

Bei einem eingestellten ermittelten Abstand kann das Deaktivierungssignal vorteilhafterweise einfach ausgegeben werden, sobald der Nutzfahrzeuganhänger einen eingestellten Abstand zu der Rampe erreicht haben kann. Hierbei kann der eingestellte Abstand an den Nutzfahrzeuganhänger angepasst werden, sodass ein sicheres und schnelles Beladen und Entladen gewährleistet werden kann.

Bei Messen einer Spannung oder beim Abkoppeln des Nutzfahrzeuganhängers kann auf einfache Weise festgestellt werden, dass der Nutzfahrzeuganhänger nicht mehr bewegt wird und somit die Anfahrt der Rampe abgeschlossen ist.

Besonders einfach kann das Deaktivierungssignal über die Betätigung eines Schalters ausgegeben werden.

In einer beispielhaften Ausführungsform kann das Verfahren ferner umfassen:
- Ausgeben des Deaktivierungssignals, insbesondere von dem mindestens einen Deaktivierungssensor, nach einer vorgegebenen Zeit.

Vorteilhafterweise kann auf diese Weise das Verfahren nach einer vorgegebenen Zeit beendet werden, sodass nach erfolgter Initiierung des Verfahrens kein weiteres Handeln notwendig ist. Somit kann das Verfahren weiter vereinfacht werden. Ebenso kann auch für den Fall, dass beispielsweise ein manuelles Beenden des Verfahrens vergessen wurde, das Verfahren beendet werden. Hierdurch wird automatisch und auf einfache Weise Energie eingespart.

In einer beispielhaften Ausführungsform kann das Verfahren ferner umfassen:
- Anhalten, Zurücksetzen und/oder Verlängern der vorgegebenen Zeit bei der Rampenanfahrt des Nutzfahrzeuganhängers und/oder unterhalb eines festgelegten ermittelten Abstandes.

Vorteilhafterweise kann die Zeit angehalten, zurückgesetzt oder verlängert werden, wenn der Nutzfahrzeuganhänger rückwärtsfährt. Somit wird vorteilhafterweise verhindert, dass das Verfahren während des Annäherns beendet wird. Vorteilhafterweise wird die Zeit unterhalb eines festgelegten berechneten Abstandes angehalten, zurückgesetzt oder verlängert, sodass unterhalb eines festgelegten berechneten Abstandes, beispielsweise zu einer Rampe, gewährleistet werden kann, dass das Verfahren aktiv sein kann und die Rampenanfahrt unterstützt werden kann.

In beispielhaften Ausführungsformen werden die von dem mindestens einen Messmittel, dem mindestens einen Aktivierungssensor und/oder dem mindestens einen Deaktivierungssensor ermittelten Informationen über ein Bussystem des Nutzfahrzeuganhängers an die mindestens eine Steuereinrichtung (z.B. eine Busschnittstelle der Steuermittel) übertragen. Ebenfalls können Daten von dem Steuermittel an die mindestens eine Ausgabevorrichtung mittels eines solchen Bussystems übertragen werden. Beispiele für ein solches Bussystem sind ein CAN-, K-Leitung-, LIN- oder Flexray-Bussystem sowie Automotive Ethernet. CAN ist in den Standards der ISO 11898-Familie, K-Leitung ist in den Standards ISO 9141 und ISO 14230-1, LIN ist in den Standards der ISO 17987-Familie und Flexray in den Standards der ISO 17458-Familie spezifiziert. Automotive Ethernet ist unter anderem in den Standards IEEE 802.3bw und IEEE 802.3bp spezifiziert.

Die Kommunikation zwischen dem mindestens einen Messmittel, dem mindestens einen Aktivierungssensor, dem mindestens einen Deaktivierungssensor, der mindestens einen Steuereinrichtung, der mindestens einen Ausgabevorrichtung und/oder der mindestens einen Bremseinrichtung kann beispielsweise drahtgebunden oder drahtlos erfolgen.

Zum Beispiel erfolgt die Kommunikation gemäß einem drahtgebundenen Kommunikationsstandard. Beispiele für einen solchen drahtgebundenen Kommunikationsstandard sind CAN, K-Leitung, LIN oder Flexray. CAN ist in den Standards der ISO 11898-Familie, K-Leitung ist in den Standards ISO 9141 und ISO 14230-1, LIN ist in den Standards der ISO 17987-Familie und Flexray in den Standards der ISO 17458-Familie spezifiziert.

Beispielsweise erfolgt das Kommunizieren drahtlos. Zum Beispiel erfolgt die Kommunikation gemäß einem drahtlosen Kommunikationsstandard. Beispiele für einen solchen drahtlosen Kommunikationsstandard sind WLAN, GSM, UMTS und/oder LTE. WLAN ist zum Beispiel in den Standards der IEEE-802.11-Familie spezifiziert. Die GSM-, UMTS- und LTE-Spezifikationen werden von dem 3rd Generation Partnership Project (3GPP) gepflegt und entwickelt und sind derzeit im Internet unter anderem unter www.3gpp.com erhältlich.

In beispielhaften Ausführungsformen ist der Nutzfahrzeuganhänger antriebslos. Dass der Nutzfahrzeuganhänger antriebslos ist, bedeutet beispielsweise, dass der Nutzfahrzeuganhänger keine Antriebsmittel umfasst und sich daher nicht selber (fort-)bewegen kann.

Weitere vorteilhafte beispielhafte Ausführungsformen der Aspekte der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung verstanden werden.

Es zeigen:
- Fig. 1: eine schematische Darstellung einer beispielhaften Ausführungsform eines Nutzfahrzeuganhängers gemäß der Erfindung;
- Fig. 2: eine weitere schematische Darstellung einer beispielhaften Ausführungsform eines Nutzfahrzeuganhängers gemäß der Erfindung; und
- Fig. 3: ein Blockdiagramm einer beispielhaften Ausführungsform eines Nutzfahrzeuganhängers gemäß der Erfindung.

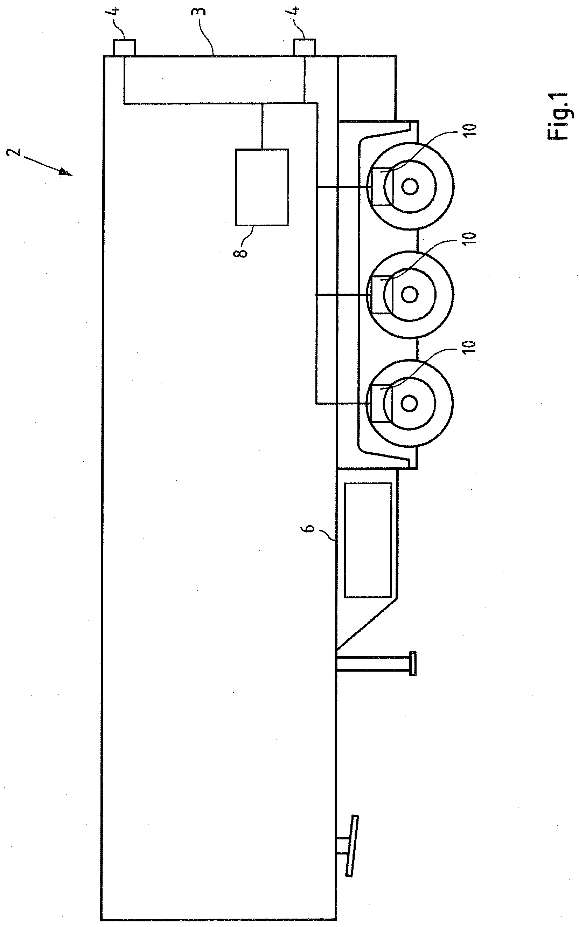

Fig. 1 zeigt eine schematische Darstellung einer beispielhaften Ausführungsform eines Nutzfahrzeuganhängers 2 zur Verbindung mit einer Zugmaschine oder einem Zugfahrzeug, eingerichtet zur unterstützten Rampenanfahrt, insbesondere bei Rückwärtsfahrt, gemäß der Erfindung.

Der Nutzfahrzeuganhänger 2 umfasst eine den Nutzfahrzeuganhänger rückseitig begrenzende Wand 3 sowie zwei Messmittel 4 zur Ermittlung von Daten indikativ für einen Abstand von der Wand 3 zu einem außerhalb des Nutzfahrzeuganhängers 2 befindlichen Objekt, eine Energiequelle 6, eine Steuereinrichtung 8 und drei Bremseinrichtungen 10.

Die Steuereinrichtung 8 ist zur Ermittlung von einem Abstand aus den von dem mindestens einen Messmittel 4 ermittelten Daten eingerichtet und die Steuereinrichtung 8 steuert abhängig vom dem ermittelten Abstand die mindestens eine Bremseinrichtung 10. Zudem versorgt die Energiequelle 6 die Messmittel 4, die Steuereinrichtung 8 und die Bremseinrichtungen 10 mit Energie. Auf diese Weise kann über die Steuereinrichtung 8 die Geschwindigkeit des Nutzfahrzeuganhängers 2 abhängig von dem ermittelten Abstand gesteuert werden.

Die Messmittel 4 können Ultraschallsensoren, Radarsensoren und/oder optische Sensoren sein.

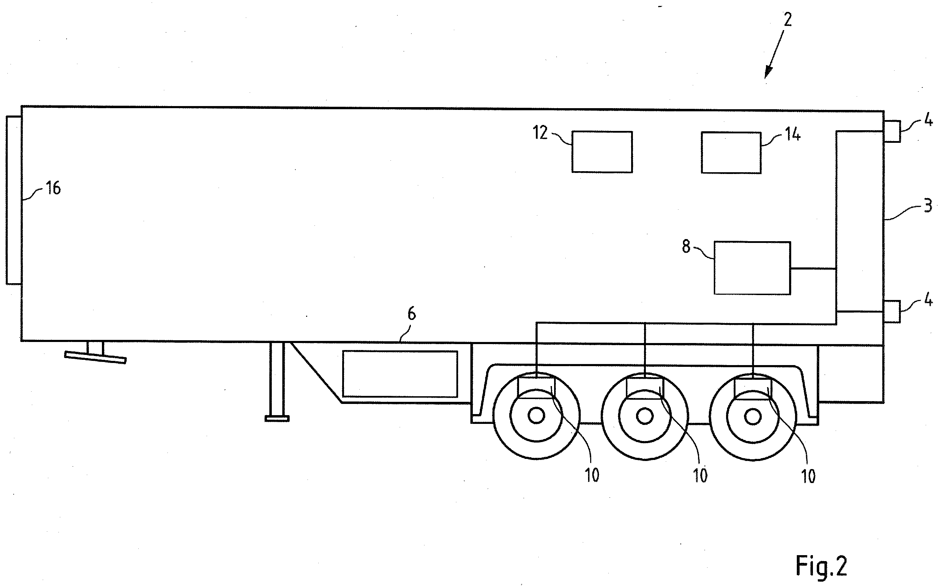

Fig. 2 zeigt eine weitere schematische Darstellung einer beispielhaften Ausführungsform eines Nutzfahrzeuganhängers 2, wobei der Nutzfahrzeuganhänger 2 ebenfalls Messmittel 4, eine Energiequelle 6, eine Steuereinrichtung 8 und drei Bremseinrichtungen 10 aufweist.

Darüber hinaus umfasst der Nutzfahrzeuganhänger 2 ferner mindestens einen Aktivierungssensor 12. Der Aktivierungssensor 12 erfasst ein Aktivierungsereignis und gibt anschließend in Abhängigkeit des ermittelten Aktivierungsereignisses ein Aktivierungssignal aus. Durch das Aktivierungssignal versorgt die Energiequelle 6 das Messmittel 4, die Steuereinrichtung 8, mindestens eine Ausgabevorrichtung 16 und/oder die Bremseinrichtungen 10 mit Energie.

Der Aktivierungssensor 12 kann eine Telematikeinrichtung oder ein Bestandteil einer Telematikeinrichtung, ein ABS Sensors, ein Kilometerzähler, ein Präzisionskilometerzähler, ein Beschleunigungssensor, ein Spannungssensor, ein Achslastsensor, ein Schalter und/oder ein Lagesensor, insbesondere ein GPS Sensor, sein. Somit kann das Aktivierungssignal bei einer Rückwärtsfahrt, bei einer Rückwärtsbeschleunigung, bei einer Lagebestimmung und/oder bei der Messung einer Spannung ausgegeben werden.

Ferner umfasst der Nutzfahrzeuganhänger 2 mindestens einen Deaktivierungssensor 14, wobei der Deaktivierungssensor 14 ein Deaktivierungsereignis erfasst und anschließend in Abhängigkeit des Deaktivierungsereignisses ein Deaktivierungssignal ausgibt. Durch das Deaktivierungssignal wird die Versorgung des Messmittels 4, der Steuereinrichtung 8, der mindestens einen Ausgabevorrichtung 16 und/oder der Bremseinrichtungen 10 mit Energie durch die Energiequelle 6 beendet.

Der Deaktivierungssensor 14 kann ein Schwingungssensor, eine Zeitschaltuhr, ein Spannungssensor, ein Annäherungssensor und/oder ein Schalter sein. Somit kann das Deaktivierungssignal bei einem Anstoßen des Nutzfahrzeuganhängers, bei einem eingestellten ermittelten Abstand, beim Messen einer Spannung, beim Abkoppeln des Nutzfahrzeuganhängers 2 und/oder bei der Betätigung eines Schalters ausgegeben werden. Zudem kann das Deaktivierungssignal nach einer vorgegebenen Zeit ausgegeben werden, wobei die vorgegebene Zeit bei der Rückwärtsfahrt des Nutzfahrzeuganhängers 2 und/oder unterhalb eines festgelegten ermittelten Abstandes angehalten, zurückgesetzt und/oder verlängert werden kann.

Darüber hinaus umfasst Nutzfahrzeuganhänger 2 eine Ausgabevorrichtung 16, wobei die Ausgabevorrichtung 16 zur Ausgabe eines optischen und/oder akustischen Signals abhängig vom dem ermittelten Abstand eingerichtet ist. Die Ausgabevorrichtung 16 kann beispielsweise Blinkcodes indikativ für einen Aktivitätszustands und/oder für einen Abstand zu einem außerhalb des Nutzfahrzeuganhängers 2 befindlichen Objekts ausgeben.

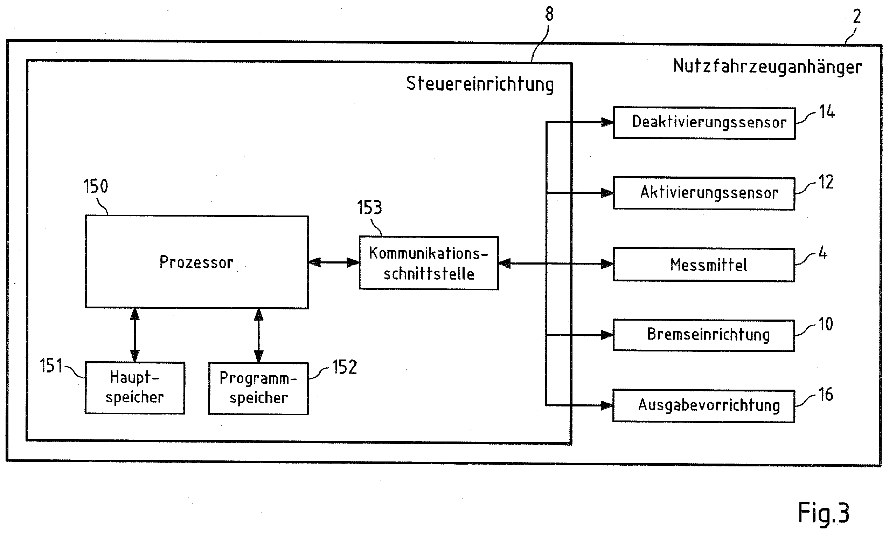

Fig. 3 zeigt ein Blockdiagramm einer beispielhaften Ausführungsform eines Nutzfahrzeuganhängers 2 gemäß der Erfindung. Im Folgenden wird davon ausgegangen, dass der Nutzfahrzeuganhänger 2 gemäß Fig. 3 den Nutzfahrzeuganhängern 2 gemäß Fig. 1 und 2 im Wesentlichen entspricht.

In Fig. 3 sind als beispielsweise Bestandteile des Nutzfahrzeuganhängers 2 ein Messmittel 4, eine Steuereinrichtung 8, eine Bremseinrichtungen 10, ein Aktivierungssensor 12, ein Deaktivierungssensor 14 und eine Ausgabevorrichtung 16 dargestellt.

Die Steuereinrichtung 8 ist eingerichtet zur Ermittlung von einem Abstand aus den von dem mindestens einen Messmittel 4 ermittelten Daten und zur Steuerung der Bremseinrichtung 10 abhängig von dem ermittelten Abstand.

Zu diesem Zweck umfasst die Steuereinrichtung 8 einen Prozessor 150 und verbunden mit dem Prozessor 150 einen ersten Speicher als Programm- und Datenspeicher 152, einen zweiten Speicher als Hauptspeicher 151 und eine Kommunikationsschnittstelle 153

Unter einem Prozessor soll beispielsweise ein Mikroprozessor, eine Mikrokontrolleinheit, ein Mikrocontroller, ein digitaler Signalprozessor (DSP), eine Anwendungsspezifische Integrierte Schaltung (ASIC) oder ein Field Programmable Gate Array (FPGA) verstanden werden. Es versteht sich, dass die Steuereinrichtung 8 auch mehrere Prozessoren 150 umfassen kann.

Prozessor 150 führt Programmanweisungen aus, die in Programmspeicher 152 gespeichert sind, und speichert beispielsweise Zwischenergebnisse oder ähnliches in Hauptspeicher 151. Der Programmspeicher 152 enthält beispielsweise Programmanweisungen eines Computerprogramms, die die Steuereinrichtung 8 veranlassen, die Bremseinrichtung 10 abhängig von dem ermittelten Abstand zu steuern, wenn der Prozessor 150 diese in Programmspeicher 152 gespeicherten Programmanweisungen ausführt.

Es versteht sich, dass die Programmanweisungen des Computerprogramms beispielsweise an die individuellen Fahreigenschaften des Nutzfahrzeuganhängers 2 angepasst sein können.

Programmspeicher 152 enthält ferner beispielsweise das Betriebssystem der Steuereinrichtung 8, das beim Starten der Steuereinrichtung 8 zumindest teilweise in Hauptspeicher 151 geladen und vom Prozessor 150 ausgeführt wird. Insbesondere wird beim Starten der Steuereinrichtung 8 zumindest ein Teil des Kerns des Betriebssystems in den Hauptspeicher 151 geladen und von Prozessor 150 ausgeführt.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Steuereinrichtung 8 zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Hauptspeicher 151 und Programmspeicher 152 können auch als ein Speicher ausgebildet sein. Alternativ können Hauptspeicher 151 und/oder Programmspeicher 152 jeweils durch mehrere Speicher gebildet werden. Ferner können Hauptspeicher 151 und/oder Programmspeicher 152 auch Teil des Prozessors 150 sein.

Prozessor 150 steuert die Kommunikationsschnittstelle 153, welche beispielsweise als CAN-, K-Leitungs-, LIN- oder Flexray-Schnittstelle ausgebildet ist. Die Kommunikationsschnittstelle 153 des Nutzfahrzeuganhängers 2 ist beispielsweise eingerichtet zur drahtgebundenen Kommunikation mit den Messmitteln 4, mit der Bremseinrichtung 10, mit dem Aktivierungssensor 12, mit dem Deaktivierungssensor 14 und mit der Ausgabevorrichtung 16. Zum Beispiel kann die Steuereinrichtung 8 durch die Kommunikationsschnittstelle 153 durch die Messmittel 4 bereitgestellte Daten indikativ für einen Abstand der Wand 3 zu einem außerhalb des Nutzfahrzeuganhängers 2 befindlichen Objekt empfangen.

In den Ansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung oder ein einzelnes Mittel kann die Funktionen mehrerer in den Patentansprüchen genannten Einheiten bzw. Einrichtungen ausführen. In den Ansprüchen angegebene Bezugszeichen sind nicht als Beschränkungen der eingesetzten Mittel und Schritte anzusehen.

## Patentansprüche

1. Nutzfahrzeuganhänger (2) zur Verbindung mit einem Zugfahrzeug eingerichtet zur unterstützten Rampenanfahrt,
- mit zumindest einer den Nutzfahrzeuganhänger (2) begrenzenden Wand (3),
- mit mindestens einem Messmittel (4) zur Ermittlung von Daten indikativ für einen Abstand zwischen der zumindest einen Wand (3) und einem außerhalb des Nutzfahrzeuganhängers (2) befindlichen Objekt,
- mit mindestens einer Energiequelle (6),
- mit mindestens einer Steuereinrichtung (8), und
- mit mindestens einer Bremseinrichtung (10) und/oder mit mindestens einer Ausgabevorrichtung (16),
- wobei die mindestens eine Steuereinrichtung (8) zur Berechnung des Abstands aus den von dem mindestens einen Messmittel (4) ermittelten Daten eingerichtet ist und in Abhängigkeit des ermittelten Abstands die mindestens eine Bremseinrichtung (10) und/oder die mindestens eine Ausgabevorrichtung (16) steuert,
- wobei die mindestens eine Energiequelle (6) zur Versorgung des mindestens einen Messmittels (4), und der mindestens einen Steuereinrichtung (8) sowie der mindestens einen Bremseinrichtung (10) und/oder der mindestens einen Ausgabevorrichtung (16) mit Energie eingerichtet ist,
- wobei der Nutzfahrzeuganhänger (2) ferner mindestens einen Aktivierungssensor (12) umfasst,
- wobei der mindestens eine Aktivierungssensor (12) zum Erfassen eines Aktivierungsereignisses und zur Ausgabe eines Aktivierungssignals eingerichtet ist,
- wobei die mindestens eine Energiequelle (6) durch das Aktivierungssignal das mindestens eine Messmittel (4), die mindestens eine Steuereinrichtung (8), die mindestens eine Ausgabevorrichtung (16) und/oder die mindestens eine Bremseinrichtung (10) mit Energie versorgt,
- wobei der mindestens eine Aktivierungssensor (12) einen Sensor einer Telematikeinrichtung, einen ABS Sensor, einen Kilometerzähler, insbesondere einen Präzisionskilometerzähler, einen Beschleunigungssensor, einen Spannungssensor, einen Achslastsensor, und/oder einen Lagesensor, insbesondere einen GPS Sensor, umfasst, und
- wobei das Aktivierungsereignis indikativ für den Beginn der Anfahrt einer Rampe ist.

2. Nutzfahrzeuganhänger gemäß Anspruch 1,
- wobei das mindestens eine Messmittel (4) einen Ultraschallsensor, einen Radarsensor und/oder einen optischen Sensor umfasst.

3. Nutzfahrzeuganhänger gemäß Anspruch 1 oder 2,
- wobei der mindestens eine Aktivierungssensor (12) einen Schalter umfasst.

4. Nutzfahrzeuganhänger gemäß einem der Ansprüche 1 bis 3,
- wobei der Nutzfahrzeuganhänger (2) ferner mindestens einen Deaktivierungssensor (14) umfasst,
- wobei der mindestens eine Deaktivierungssensor (14) zum Erfassen eines Deaktivierungsereignisses und zur Ausgabe eines Deaktivierungssignals eingerichtet ist, und
- wobei die mindestens eine Energiequelle (6) durch das Deaktivierungssignal die Versorgung des mindestens einen Messmittels (4), der mindestens einen Steuereinrichtung (8), der mindestens einen Ausgabevorrichtung (16) und/oder der mindestens einen Bremseinrichtung (10) mit Energie unterbricht.

5. Nutzfahrzeuganhänger gemäß Anspruch 4,
- wobei der mindestens eine Deaktivierungssensor (14) einen Schwingungssensor, eine Zeitschaltuhr, einen Spannungssensor, einen Annäherungssensor und/oder einen Schalter umfasst.

6. Nutzfahrzeuganhänger gemäß einem der Ansprüche 1 bis 5,
- wobei die mindestens eine Ausgabevorrichtung (16) zur Ausgabe eines optischen und/oder akustischen Signals in Abhängigkeit des ermittelten Abstands eingerichtet ist.

7. Verfahren zur unterstützten Rampenanfahrt eines Nutzfahrzeuganhängers (2), insbesondere eines Nutzfahrzeuganhängers (2) gemäß einem der Ansprüche 1 bis 6,
umfassend folgende Schritte:
- Ermitteln von Daten indikativ für einen Abstand zwischen einer den Nutzfahrzeuganhänger (2) begrenzenden Wand (3) und einem außerhalb des Nutzfahrzeuganhängers (2) befindlichen Objekt mittels mindestens eines Messmittels (4),
- Berechnung des Abstands aus den ermittelten Daten mittels mindestens einer Steuereinrichtung (8),
- Steuern mindestens einer Bremseinrichtung (10) und/oder mindestens einer Ausgabevorrichtung (16), insbesondere durch die mindestens eine Steuereinrichtung (8), in Abhängigkeit des ermittelten Abstands,
- wobei mit mindestens einer Energiequelle (6) das mindestens eine Messmittel (4) und die mindestens eine Steuereinrichtung (8) sowie die mindestens eine Bremseinrichtung (10) und/oder die mindestens eine Ausgabevorrichtung (16) mit Energie versorgt wird, und
- wobei insbesondere das mindestens eine Messmittel (4), die mindestens eine Energiequelle (6) und die mindestens eine Steuereinrichtung (8) sowie die mindestens eine Bremseinrichtung (10) und/oder die mindestens eine Ausgabevorrichtung (16) Bestandteile des Nutzfahrzeuganhängers (2) sind, wobei das Verfahren ferner umfasst:
- Erfassen eines Aktivierungsereignisses durch mindestens einen Aktivierungssensor (12),
- Ausgeben eines Aktivierungssignals, insbesondere von dem mindestens einen Aktivierungssensor (12), zum Initiieren des Verfahrens, und
- Initiieren der Versorgung des mindestens einen Messmittels (4), der mindestens einen Steuereinrichtung (8), der mindestens einen Ausgabevorrichtung (16) und/oder der mindestens einen Bremseinrichtung (10) mit Energie durch die mindestens eine Energiequelle (6),
- Ausgeben des Aktivierungssignals bei einer Rückwärtsfahrt, bei einer Rückwärtsbeschleunigung, bei einer Lagebestimmung und/oder bei der Messung einer Spannung,
- wobei das Aktivierungsereignis indikativ für den Beginn der Anfahrt einer Rampe ist.

8. Verfahren gemäß Anspruch 7, ferner umfassend:
- Steuern der Geschwindigkeit des Nutzfahrzeuganhängers (2) abhängig von dem ermittelten Abstand.

9. Verfahren gemäß Anspruch 7 oder 8, ferner umfassend:
- Erfassen eines Deaktivierungsereignisses, insbesondere durch mindestens einen Deaktivierungssensor (12),
- Ausgeben eines Deaktivierungssignals, insbesondere von dem mindestens einen Deaktivierungssensor (12), zum Beenden des Verfahrens, und
- insbesondere Beenden der Versorgung des mindestens einen Messmittels (4), der mindestens einen Steuereinrichtung (8), der mindestens einen Ausgabevorrichtung (16) und/oder der mindestens einen Bremseinrichtung (10) mit Energie durch die mindestens eine Energiequelle (6).

10. Verfahren gemäß Anspruch 9, ferner umfassend:
- Ausgeben des Deaktivierungssignals, insbesondere von dem mindestens einen Deaktivierungssensor (12), bei einem Anstoßen zumindest einer den Nutzfahrzeuganhänger (2) begrenzenden Wand (3) mit einem außerhalb des Nutzfahrzeuganhängers (2) befindlichen Objekt, bei einem eingestellten ermittelten Abstand, beim Messen einer Spannung, beim Abkoppeln des Nutzfahrzeuganhängers (2) und/oder bei der Betätigung eines Schalters.

11. Verfahren gemäß einem der Ansprüche 9 oder 10,
- Ausgeben des Deaktivierungssignals, insbesondere von dem mindestens einen Deaktivierungssensor (14), nach einer vorgegebenen Zeit.

12. Verfahren gemäß Anspruch 11, ferner umfassend:
- Anhalten, Zurücksetzen und/oder Verlängern der vorgegebenen Zeit bei der Rampenanfahrt des Nutzfahrzeuganhängers (2) und/oder unterhalb eines festgelegten ermittelten Abstandes.

## Claims

1. Commercial vehicle trailer (2) for coupling to a towing vehicle, configured for assisted ramp approach,
- with at least one wall (3) bounding the commercial vehicle trailer (2),
- with at least one measuring means (4) for determining data indicative of a distance between the at least one wall (3) and an object located outside the commercial vehicle trailer (2),
- with at least one energy source (6),
- with at least one control device (8), and
- with at least one braking device (10) and/or with at least one output device (16),
- wherein the at least one control device (8) is configured to calculate the distance from the data determined by the at least one measuring means (4) and, depending on the determined distance, controls the at least one braking device (10) and/or the at least one output device (16),
- wherein the at least one energy source (6) is configured to supply energy to the at least one measuring means (4), the at least one control device (8), the at least one braking device (10) and/or the at least one output device (16),
- wherein the commercial vehicle trailer (2) further comprises at least one activation sensor (12),
- wherein the at least one activation sensor (12) is configured to detect an activation event and to output an activation signal,
- wherein the at least one energy source (6) supplies energy to the at least one measuring means (4), the at least one control device (8), the at least one output device (16) and/or the at least one braking device (10) via the activation signal,
- wherein the at least one activation sensor (12) comprises a sensor of a telematics device, an ABS sensor, an odometer, in particular a precision odometer, an acceleration sensor, a voltage sensor, an axle load sensor, and/or a position sensor, in particular a GPS sensor, and
- wherein the activation event is indicative of the beginning of a ramp approach.

2. Commercial vehicle trailer according to claim 1,
- wherein the at least one measuring means (4) comprises an ultrasonic sensor, a radar sensor and/or an optical sensor.

3. Commercial vehicle trailer according to claim 1 or 2,
- wherein the at least one activation sensor (12) comprises a switch.

4. Commercial vehicle trailer according to any one of claims 1 to 3,
- wherein the commercial vehicle trailer (2) further comprises at least one deactivation sensor (14),
- wherein the at least one deactivation sensor (14) is configured to detect a deactivation event and to output a deactivation signal, and
- wherein the at least one energy source (6) interrupts the supply of energy to the at least one measuring means (4), the at least one control device (8), the at least one output device (16) and/or the at least one braking device (10) in response to the deactivation signal.

5. Commercial vehicle trailer according to claim 4,
- wherein the at least one deactivation sensor (14) comprises a vibration sensor, a timer, a voltage sensor, a proximity sensor and/or a switch.

6. Commercial vehicle trailer according to any one of claims 1 to 5,
- wherein the at least one output device (16) is configured to output a visual and/or audible signal depending on the determined distance.

7. A method for assisted ramp approach of a commercial vehicle trailer (2), in particular a commercial vehicle trailer (2) according to any one of claims 1 to 6, comprising the following steps:
- determining data indicative of a distance between a wall (3) bounding the commercial vehicle trailer (2) and an object located outside the commercial vehicle trailer (2) by means of at least one measuring means (4),
- calculating the distance from the determined data by means of at least one control device (8),
- controlling at least one braking device (10) and/or at least one output device (16), in particular by the at least one control device (8), as a function of the determined distance,
- wherein at least one energy source (6) supplies energy to the at least one measuring means (4) and the at least one control device (8), as well as to the at least one braking device (10) and/or the at least one output device (16), and
- wherein, in particular, the at least one measuring means (4), the at least one energy source (6) and the at least one control device (8), as well as the at least one braking device (10) and/or the at least one output device (16), are components of the commercial vehicle trailer (2),
wherein the method further comprises:
- detecting an activation event by at least one activation sensor (12),
- outputting an activation signal, in particular from the at least one activation sensor (12), to initiate the method, and
- initiating the supply of energy to the at least one measuring means (4), the at least one control device (8), the at least one output device (16) and/or the at least one braking device (10) by the at least one energy source (6),
- outputting the activation signal during reverse driving, during reverse acceleration, during position determination and/or during the measurement of a voltage,
- whereby the activation event is indicative of the beginning of a ramp approach.

8. A method according to claim 7, further comprising:
- controlling the speed of the commercial vehicle trailer (2) as a function of the determined distance.

9. A method according to claim 7 or 8, further comprising:
- detecting a deactivation event, in particular by means of at least one deactivation sensor (12),
- outputting a deactivation signal, in particular from the at least one deactivation sensor (12), to terminate the method, and
- in particular, terminating the supply of energy from the at least one energy source (6) to the at least one measuring means (4), the at least one control device (8), the at least one output device (16) and/or the at least one braking device (10).

10. A method according to claim 9, further comprising:
- outputting the deactivation signal, in particular from the at least one deactivation sensor (12), upon impact of at least one wall (3) bounding the commercial vehicle trailer (2) with an object located outside the commercial vehicle trailer (2), upon a set detected distance, upon measurement of a voltage, upon uncoupling of the commercial vehicle trailer (2) and/or upon actuation of a switch.

11. A method according to one of claims 9 or 10,
- outputting the deactivation signal, in particular from the at least one deactivation sensor (14), after a predetermined time.

12. A method according to claim 11, further comprising:
- pausing, resetting and/or extending the predetermined time during the commercial vehicle trailer's (2) ramp approach and/or below a specified determined distance.

## Revendications

1. Remorque de véhicule utilitaire (2) destinée à être attelée à un véhicule tracteur et conçue pour faciliter l'accès aux rampes,
- comportant au moins une paroi (3) délimitant la remorque de véhicule utilitaire (2),
- comportant au moins un moyen de mesure (4) destiné à déterminer des données indiquant une distance entre ladite au moins une paroi (3) et un objet situé à l'extérieur de la remorque de véhicule utilitaire (2),
- comportant au moins une source d'énergie (6),
- comportant au moins un dispositif de commande (8), et
- avec au moins un dispositif de freinage (10) et/ou avec au moins un dispositif de sortie (16),
- l'au moins un dispositif de commande (8) étant conçu pour calculer la distance à partir des données déterminées par l'au moins un moyen de mesure (4) et commandant, en fonction de la distance déterminée, l'au moins un dispositif de freinage (10) et/ou l'au moins un dispositif de sortie (16),
- l'au moins une source d'énergie (6) étant agencée pour alimenter en énergie l'au moins un moyen de mesure (4), l'au moins un dispositif de commande (8) ainsi que l'au moins un dispositif de freinage (10) et/ou l'au moins un dispositif de sortie (16),
- la remorque de véhicule utilitaire (2) comprenant en outre au moins un capteur d'activation (12),
- dans lequel ledit au moins un capteur d'activation (12) est conçu pour détecter un événement d'activation et pour émettre un signal d'activation,
- dans lequel l'au moins une source d'énergie (6) alimente en énergie, par le biais du signal d'activation, l'au moins un moyen de mesure (4), l'au moins un dispositif de commande (8), l'au moins un dispositif de sortie (16) et/ou l'au moins un dispositif de freinage (10),
- dans lequel l'au moins un capteur d'activation (12) comprend un capteur d'un dispositif télématique, un capteur ABS, un compteur kilométrique, en particulier un compteur kilométrique de précision, un capteur d'accélération, un capteur de tension, un capteur de charge par essieu et/ou un capteur de position, en particulier un capteur GPS, et
- l'événement d'activation étant indicatif du début de la montée d'une rampe.

2. Remorque de véhicule utilitaire selon la revendication 1,
- dans laquelle ledit au moins un moyen de mesure (4) comprend un capteur à ultrasons, un capteur radar et/ou un capteur optique.

3. Remorque de véhicule utilitaire selon la revendication 1 ou 2,
- dans laquelle l'au moins un capteur d'activation (12) comprend un interrupteur.

4. Remorque de véhicule utilitaire selon l'une des revendications 1 à 3,
- la remorque de véhicule utilitaire (2) comprenant en outre au moins un capteur de désactivation (14),
- dans laquelle ledit au moins un capteur de désactivation (14) est conçu pour détecter un événement de désactivation et pour émettre un signal de désactivation, et
- dans lequel l'au moins une source d'énergie (6) interrompt, par le signal de désactivation, l'alimentation en énergie de l'au moins un moyen de mesure (4), de l'au moins un dispositif de commande (8), de l'au moins un dispositif de sortie (16) et/ou de l'au moins un dispositif de freinage (10).

5. Remorque de véhicule utilitaire selon la revendication 4,
- dans laquelle l'au moins un capteur de désactivation (14) comprend un capteur de vibrations, une minuterie, un capteur de tension, un capteur de proximité et/ou un interrupteur.

6. Remorque de véhicule utilitaire selon l'une des revendications 1 à 5,
- dans laquelle l'au moins un dispositif de sortie (16) est agencé pour émettre un signal optique et/ou acoustique en fonction de la distance déterminée.

7. Procédé d'aide à l'approche d'une rampe pour une remorque de véhicule utilitaire (2), en particulier une remorque de véhicule utilitaire (2) selon l'une des revendications 1 à 6,
comprenant les étapes suivantes :
- détermination de données indicatives d'une distance entre une paroi (3) délimitant la remorque de véhicule utilitaire (2) et un objet situé à l'extérieur de la remorque de véhicule utilitaire (2) au moyen d'au moins un moyen de mesure (4),
- calcul de la distance à partir des données déterminées à l'aide d'au moins un dispositif de commande (8),
- commande d'au moins un dispositif de freinage (10) et/ou d'au moins un dispositif de sortie (16), en particulier par ledit au moins un dispositif de commande (8), en fonction de la distance déterminée,
- dans lequel au moins une source d'énergie (6) alimente en énergie l'au moins un moyen de mesure (4) et l'au moins un dispositif de commande (8) ainsi que l'au moins dispositif de freinage (10) et/ou l'au moins dispositif de sortie (16), et
- dans lequel, en particulier, l'au moins un moyen de mesure (4), l'au moins une source d'énergie (6) et l'au moins un dispositif de commande (8) ainsi que l'au moins un dispositif de freinage (10) et/ou l'au moins un dispositif de sortie (16) font partie intégrante de la remorque de véhicule utilitaire (2),
le procédé comprenant en outre :
- détection d'un événement d'activation par au moins un capteur d'activation (12),
- émission d'un signal d'activation, en particulier par ledit au moins un capteur d'activation (12), pour lancer le procédé, et
- lancement de l'alimentation en énergie de l'au moins un moyen de mesure (4), de l'au moins un dispositif de commande (8), de l'au moins un dispositif de sortie (16) et/ou de l'au moins un dispositif de freinage (10) par l'au moins une source d'énergie (6),
- émission du signal d'activation lors d'une marche arrière, lors d'une accélération en marche arrière, lors d'une détermination de position et/ou lors de la mesure d'une tension,
- l'événement d'activation indiquant le début de la montée d'une rampe.

8. Procédé selon la revendication 7, comprenant en outre :
- la commande de la vitesse de la remorque de véhicule utilitaire (2) en fonction de la distance déterminée.

9. Procédé selon la revendication 7 ou 8, comprenant en outre :
- la détection d'un événement de désactivation, notamment par au moins un capteur de désactivation (14),
- l'émission d'un signal de désactivation, notamment par ledit au moins un capteur de désactivation (14), pour mettre fin au procédé, et
- en particulier, interruption de l'alimentation en énergie de l'au moins un moyen de mesure (4), de l'au moins un dispositif de commande (8), de l'au moins un dispositif de sortie (16) et/ou de l'au moins un dispositif de freinage (10) par l'au moins une source d'énergie (6).

10. Procédé selon la revendication 9, comprenant en outre :
- l'émission du signal de désactivation, en particulier par l'au moins un capteur de désactivation (14), lors d'une collision d'au moins une paroi (3) délimitant la remorque de véhicule utilitaire (2) avec un objet situé à l'extérieur de la remorque de véhicule utilitaire (2), lors d'une distance déterminée prédéfinie, lors de la mesure d'une tension, lors du dételage de la remorque de véhicule utilitaire (2) et/ou lors de l'actionnement d'un interrupteur.

11. Procédé selon l'une des revendications 9 ou 10,
- émission du signal de désactivation, en particulier par l'au moins un capteur de désactivation (14), après un temps prédéfini.

12. Procédé selon la revendication 11, comprenant en outre :
- l'arrêt, la réinitialisation et/ou la prolongation du temps prédéfini lors de la montée de la remorque du véhicule utilitaire (2) sur une rampe et/ou en dessous d'une distance déterminée prédéfinie.
